# EUROPÄISCHE PATENTANMELDUNG

(11) **EP 2 149 471 A1**
(43) Veröffentlichungstag der Anmeldung: **03.02.2010**
(21) Anmeldenummer: 09163537.5
(22) Anmeldetag: 24.06.2009
(51) Int. Cl.: B60K 17/28, B60K 25/06, B60W 10/02, B60W 30/18

(54) **Verfahren und Anordnung zum Ankoppeln und zum Abkoppeln eines Nebenabtriebes bei einem automatisierten Getriebe**

(30) Priorität: 28.07.2008 DE 102008040757
(71) Anmelder: ZF FRIEDRICHSHAFEN Aktiengesellschaft, 88038 Friedrichshafen (DE)
(72) Erfinder: Moser, Wilhelm, 88630 Pfullendorf (DE)

(57) **Zusammenfassung**

Es wird ein Verfahren zum Ankoppeln eines Nebenabtriebes bei einem automatisierten Getriebe eines Fahrzeuges vorgeschlagen, bei dem nach der Anforderung des Ankoppelns des Nebenabtriebes die Erfüllung vorbestimmter Bedingungen überprüft werden und bei Erfüllung der vorbestimmten Bedingungen eine Aktorik (4) zum Ankoppeln des Nebenabtriebes aktiviert wird, wobei die Aktorik zum Ankoppeln des Nebenabtriebes durch das Getriebesteuergerät (2) angesteuert wird. Ferner wird ein Verfahren zum Abkoppeln eines Nebenabtriebes bei einem automatisierten Getriebe eines Fahrzeuges vorgeschlagen, bei dem nach der Anforderung des Abkoppelns des Nebenabtriebes die Erfüllung vorbestimmter Bedingungen überprüft werden und bei Erfüllung der vorbestimmten Bedingungen eine Aktorik (4) zum Abkoppeln des Nebenabtriebes aktiviert wird, wobei die Aktorik (4) zum Abkoppeln des Nebenabtriebes durch das Getriebesteuergerät (2) angesteuert wird. Schließlich wird auch eine Anordnung zum Ansteuern eines Ankoppel- und/oder eines Abkoppelvorgangs eines Nebenabtriebes bei einem automatisierten Getriebe eines Fahrzeuges mit einem Getriebesteuergerät (2) vorgeschlagen, welches mit einer Kupplungsaktorik und einem Bedienelement (1) eines Nebenabtriebes gekoppelt ist, wobei zum Ankoppeln und/oder Abkoppeln des Nebenabtriebes eine Aktorik (4) des Nebenabtriebes vorgesehen ist. Erfindungsgemäß ist das Getriebesteuergerät (2) mit dem Bedienelement (1) des Nebenabtriebes und mit der Aktorik (4) des Nebenabtriebes gekoppelt.

## Beschreibung

Die vorliegende Erfindung betrifft ein Verfahren zum Ankoppeln und zum Abkoppeln eines Nebenabtriebes bei einem automatisierten Getriebe eines Fahrzeuges gemäß der im Oberbegriff des Patentanspruches 1 beziehungsweise 6 näher definierten Art. Ferner bezieht sich die Erfindung auf eine Anordnung zum Ansteuern eines Ankoppel- und/oder Abkoppelvorgangs eines Nebenabtriebes bei einem automatisierten Getriebe eines Fahrzeuges gemäß der im Oberbegriff des Patentanspruches 13 näher definierten Art.

Aus der Fahrzeugtechnik ist es bekannt, dass Nebenabtriebe bei automatisierten Schaltgetrieben bei Bedarf angekoppelt oder abgekoppelt werden. Das automatisierte Schaltgetriebe kann eine elektromechanische Kupplungssteuerung und eine elektromechanische Getriebesteuerung sowie eine Steuerelektronik umfassen, die mit der Steuerelektronik des Verbrennungsmotors über ein Bus-System in Verbindung steht. Es sind jedoch auch andere Ansteuerungsmöglichkeiten von Kupplung und Getriebe denkbar. Bei dem Getriebe besteht nun die Möglichkeit, dass der Nebenabtrieb (PTO) zugeschaltet wird, um damit zum Beispiel eine hydraulische oder mechanische Vorrichtung, wie zum Beispiel eine Hebebühne, eine Wasserpumpe oder dergleichen, zu betreiben.

Beispielsweise aus der Druckschrift DE 10 2004 027 294 A1 ist ein Verfahren und eine Anordnung zum Ankoppeln eines Nebenabtriebes bei einem Fahrzeug bekannt. Bei dem bekannten Verfahren wird zunächst ein Ankoppeln an den Nebenabtrieb angefordert und überprüft, ob vorbestimmte Bedingungen zum Ankoppeln an den Nebenabtrieb erfüllt sind oder nicht. Wenn alle vorbestimmten Bedingungen erfüllt sind, wird der Ankoppelvorgang an den Nebenabtrieb zugelassen. Wenn wenigstens eine der vorbestimmten Bedingungen nicht erfüllt ist, wird der Ankoppelvorgang abgelehnt. Der Ankoppelvorgang kann trotzdem zugelassen werden, wenn nach einem weiteren Anfordern des Ankoppelns nicht bestimmt werden kann, ob wenigstens eine Bedingung zum Durchführen des Ankoppelvorganges an den Nebenabtrieb erfüllt ist oder nicht. Die bekannte Anordnung umfasst einen Ankoppelknopf, der von einem Fahrer betätigt werden kann, wenn ein Ankoppeln des Nebenabtriebes gewünscht ist. Der Ankoppelknopf ist mit einer Steuereinheit verbunden, die in Abhängigkeit von den vorgenannten Bedingungen eine Ansteuerung des Ankoppelns des Nebenabtriebes bewirken kann.

Ferner ist aus der Druckschrift EP 1 672 236 A1 ein Verfahren und ein System zum Einlegen und Auslegen eines Nebenabtriebes bei einem Getriebe eines Fahrzeuges bekannt. Das System umfasst ein Bedienelement, welches durch den Fahrer betätigt werden kann, wenn er das Ankoppeln oder Abkoppeln des Nebenabtriebes wünscht. Des Weiteren ist ein Steuerpaneel vorgesehen, um den Fahrer mit Informationen über den Status des Nebenabtriebes zu informieren. Das Bedienelement ist mit einem Steuergerät verbunden, welches somit die Ansteuerung des Nebenabtriebes ermöglicht. Zudem ist eine Aktorik des Nebenabtriebes vorgesehen, welche einen Kupplungsmechanismus betätigt, um den Nebenabtrieb mit dem Antriebsstrang des Fahrzeuges zu koppeln. Zum Ansteuern der Aktorik ist diese mit dem Steuergerät des Nebenabtriebes verbunden.

Um die vorbestimmten Bedingungen zum Ankoppeln oder Abkoppeln des Nebenabtriebes abfragen zu können, ist es zusätzlich erforderlich, dass das Steuergerät des Nebenabtriebes mit einem zentralen Getriebesteuergerät verbunden ist. Das Getriebesteuergerät umfasst nämlich die verschiedenen Zustände des Antriebsstranges, die als Bedingungen vor dem Ankoppeln des Nebenabtriebes abgefragt werden müssen.

Das bekannte System weist einen aufwändig und kompliziert ausgestalteten Kommunikationsweg zwischen dem Bedienelement einerseits und der Aktorik des Nebenabtriebes andererseits auf. Somit ergibt sich auch ein aufwändiges Verfahren zum Ankoppeln oder Abkoppeln des Nebenabtriebes bei dem Getriebe.

Demnach liegt der Erfindung die Aufgabe zu Grunde, ein Verfahren und eine Anordnung zum Ankoppeln und zum Abkoppeln eines Nebenabtriebes bei einem automatisierten Getriebe eines Fahrzeuges der eingangs beschriebenen Gattung vorzuschlagen, welche das Ankoppeln oder Abkoppeln des Nebenabtriebes auf einfachste Weise realisieren.

Diese Aufgabe wird verfahrensmäßig durch die Merkmale des Patentanspruches 1 beziehungsweise 6 und hinsichtlich der Anordnung durch die Merkmale des Patentanspruches 13 gelöst. Weitere vorteilhafte Ausgestaltungen ergeben sich aus den jeweiligen Unteransprüchen und den Zeichnungen.

Die die Erfindung zu Grunde liegende Aufgabe wird durch ein Verfahren zum Ankoppeln eines Nebenabtriebes gelöst, bei dem nach der Anforderung des Ankoppelns des Nebenabtriebes die Erfüllung vorbestimmter Bedingungen überprüft werden und bei Erfüllung der vorbestimmten Bedingungen eine Aktorik zum Ankoppeln des Nebenabtriebes aktiviert wird, wobei die Aktorik zum Ankoppeln des Nebenabtriebes durch das Getriebesteuergerät angesteuert wird. Auf diese Weise kann mit dem erfindungsgemäßen Verfahren ein sicheres Ankoppeln des Nebenabtriebes durch eine vereinfachte Kommunikationsstruktur über das Getriebesteuergerät realisiert werden.

Beispielsweise kann die Kupplung des Getriebes über das Getriebesteuergerät geöffnet werden, wenn die vorbestimmten Bedingungen erfüllt sind. Als Bedingungen können zum Beispiel der Kupplungszustand, der Getriebewellenzustand, insbesondere der Vorgelegewelle, und der Getriebezustand allgemeinen oder dergleichen betrachtet werden. Nach dem Öffnen der Kupplung wird die noch drehende Getriebewelle bzw. Vorgelegewelle abgebremst, indem ein Gang ansynchronisiert wird. Danach kann das Getriebesteuergerät die Aktorik des Nebenabtriebes ansteuern, bis die Aktorik eine vorbestimmte Position erreicht und der Nebenabtrieb als angekoppelt gilt. Es ist auch möglich, dass eine zeitabhängige Ansteuerung der Aktorik des Nebenabtriebes verwendet wird.

Um beispielsweise eine Zahn auf Zahnstellung zwischen dem Antriebsstrang und dem Nebenabtrieb an z.B. einer Klauenkupplung oder dergleichen aufzulösen, kann gemäß einer nächsten Ausgestaltung der Erfindung vorgesehen sein, dass die Kupplung kurzzeitig geschlossen wird, um die Getriebewellen zu drehen, so dass die Zahn auf Zahnstellung beseitigt wird, wenn die Aktorik nach einer vorbestimmten Zeitspanne die vorgegebene Position beziehungsweise den vorgegebenen Weg, der dem Ankoppeln entspricht, nicht erreicht hat. Danach kann das Ankoppeln des Nebenabtriebes erneut versucht werden. Sollte auch bei einem erneuten Versuch das Ankoppeln des Nebenabtriebes nicht möglich sein, kann z.B. das Getriebesteuergerät eine Fehlermeldung dem Fahrer anzeigen. Beispielsweise nach mehreren erfolglosen Versuchen kann das Getriebesteuergerät weitere Versuche zum Ankoppeln des Nebenabtriebes blockieren.

Die der Erfindung zu Grunde liegende Aufgabe wird auch durch ein Verfahren zum Abkoppeln eines Nebenabtriebes bei einem automatisierten Getriebe eines Fahrzeuges gelöst, bei dem ebenfalls die Aktorik zum Abkoppeln des Nebenabtriebes durch das Getriebesteuergerät angesteuert wird. Es ist möglich, dass das vorgenannte erfindungsgemäße Verfahren zum Ankoppeln des Nebenabtriebes mit dem hier beschriebenen Verfahren zum Ankoppeln kombiniert wird.

Auch bei dem vorgeschlagenen Verfahren zum Abkoppeln kann gemäß einer Weiterbildung vorgesehen sein, dass die Kupplung des Getriebes durch das Getriebesteuergerät geöffnet wird, wenn die vorbestimmten Bedingungen, die auch unter anderem in den zitierten Schriften verwendet werden und ausdrücklich auch zu dem Offenbarungsgehalt dieser Anmeldung zählen, erfüllt sind. Danach kann das Getriebesteuergerät die Aktorik des Nebenabtriebes ansteuern, bis die Aktorik eine vorbestimmte Position erreicht und der Nebenabtrieb als abgekoppelt gilt. Es sind auch hier andere Ansteuerungsmöglichkeiten, wie zum Beispiel zeitliche Ansteuerungen oder dergleichen denkbar.

Wie auch schon bei dem Verfahren zum Ankoppeln kann auch bei dem Verfahren zum Abkoppeln vorgesehen sein, dass das Steuergerät erneut ein Abkoppeln des Nebenabtriebes versucht, wenn die Aktorik nach einer vorbestimmten Zeitspanne die vorgegebene Position beziehungsweise den vorgegebenen Weg nicht erreicht, der dem Abkoppeln entspricht.

Wenn das Abkoppeln des Nebenabtriebes auch nach dem erneuten Versuch wieder nicht möglich ist, kann dem Fahrer eine Fehlermeldung angezeigt werden und das System kann in den ursprünglichen Zustand zurückgestellt werden. Nach mehreren erfolglosen Versuchen des Ankoppelns kann das Getriebesteuergerät weitere Versuche blockieren.

Unabhängig davon, ob ein Verfahren zum Ankoppeln oder Abkoppeln durchgeführt wird, kann gemäß einer besonders vorteilhaften Ausgestaltung vorgesehen sein, dass die jeweils aktuelle Position beziehungsweise der jeweils aktuelle Weg der Aktorik über eine Position- beziehungsweise Wegerfassung ermittelt wird. Diese ermittelten Positionen oder Wege können an das Getriebesteuergerät kontinuierlich übermittelt werden, so dass eine optimale Ansteuerung der Aktorik des Nebenabtriebes durch das Getriebesteuergerät ermöglicht wird, ohne dass weitere Steuergeräte erforderlich sind.

Die der Erfindung zu Grunde liegende Aufgabe wird auch durch eine Anordnung zum Ansteuern eines Ankoppel- und/oder Abkoppelvorgangs eines Nebenabtriebes bei einem automatisierten Getriebe eines Fahrzeuges mit einem Steuergerät gelöst, welches mit einer Kupplungsaktorik und einem Bedienelement eines Nebenabtriebes gekoppelt ist, wobei zum Ankoppeln und/oder Abkoppeln des Nebenabtriebes eine Aktorik des Nebenabtriebes vorgesehen ist, und wobei erfindungsgemäß das Getriebesteuergerät mit dem Bedienelement des Nebenabtriebes und mit der Aktorik des Nebenabtriebes gekoppelt sind.

Auf diese Weise kann mit der erfindungsgemäß vorgeschlagenen Anordnung eine sichere Ansteuerung zum Ankoppeln oder Abkoppeln des Nebenabtriebes bei einem beliebigen Getriebe durch das bereits vorhandene Getriebesteuergerät realisiert werden, ohne dass zusätzliche Steuergeräte erforderlich sind. Dies vereinfacht erheblich die erforderliche Kommunikationsstruktur und stellt einen sicheren Ablauf zum Ankoppeln oder Abkoppeln des Nebenabtriebes dar.

Gemäß einer bevorzugten Ausführungsvariante der Erfindung kann vorgesehen sein, dass die Aktorik des Nebenabtriebes einen Elektromotor oder dergleichen zum Betätigen einer Kupplung zum Ankoppeln und/oder Abkoppeln des Nebenabtriebes und ein Relais oder dergleichen zum Ansteuern des Elektromotors umfasst, wobei das Relais mit einer Energieversorgung verbunden ist. Es sind auch andere Antriebsmöglichkeiten einsetzbar. Als Kupplung kann z.B. eine Klauenkupplung oder dergleichen Verbindungselement verwendet werden. Es sind auch andere Kopplungsmöglichkeiten zwischen Getriebe und Nebenabtrieb einsetzbar.

Vorzugsweise kann die aktuelle Position beziehungsweise der aktuelle Weg der Aktorik über eine Positionserfassung oder dergleichen erfasst werden und zur Ansteuerung verwendet werden. Beispielsweise kann als Positionserfassungseinrichtung ein Inkrementalgeber, ein Positionssensors oder dergleichen verwendet werden.

Gemäß einer vorteilhaften Weiterbildung der Erfindung ist bei der Anordnung vorgesehen, dass das Getriebesteuergerät zur Ansteuerung der Aktorik des Nebenabtriebes mit dem Relais und/oder mit der Positionserfassungseinrichtung gekoppelt ist. Vorzugsweise kann das Getriebesteuergerät über ein Bussystem mit den verschiedenen Bauteilen elektronisch verbunden sein, insbesondere mit dem Bedienelement des Nebenabtriebes.

Das vorgeschlagene Verfahren und die vorgeschlagene Anordnung kann vorzugsweise bei einem automatisierten Getriebe mit elektromechanischer Kupplungssteuerung und elektromechanischer Getriebesteuerung verwendet werden. Es ist auch möglich, dass die Verfahren und die Anordnung bei anderen Getrieben eingesetzt werden.

Vorzugsweise kann die erfindungsgemäß vorgeschlagene Anordnung zum Durchführen der ebenfalls vorgeschlagenen Verfahren verwendet werden. Es sind jedoch auch andere Anwendungsmöglichkeiten für die Verfahren und die Anordnung denkbar.

Nachfolgend wird die vorliegende Erfindung anhand der Zeichnungen näher erläutert. Es zeigen:
Fig. 1 ein Ablaufdiagramm eines Verfahrens zum Ankoppeln eines Nebenabtriebes bei einem automatisierten Getriebe;
Fig. 2 ein Ablaufdiagramm eines Verfahrens zum Abkoppeln eines Nebenabtriebes bei einem automatisierten Getriebe; und
Fig. 3 eine schematische Ansicht einer möglichen Ausführungsvariante einer erfindungsgemäßen Anordnung zum Ansteuern eines Ankoppel- und/oder eines Abkoppelvorgangs eines Nebenabtriebes.

Durch ein Ankoppeln eines Nebenabtriebes (PTO) besteht die Möglichkeit, die Rotationsenergie des Motors des Fahrzeuges auf den Nebenabtrieb zu übertragen, indem die Kupplung zwischen dem Antriebsstrang und den Nebenabtrieb geschlossen wird. Dies kann im Stillstand des Fahrzeuges dadurch geschehen, dass die Kupplung sofort nach dem Zuschalten des Nebenabtriebes in der Neutralstellung des Getriebes geschlossen wird und der Fahrer dann die Möglichkeit hat die Motordrehzahl zu regeln. Dies wird als stationärer Nebenabtrieb bezeichnet.

Es ist auch möglich, dass die Kupplung offen bleibt, bis der Fahrer diese zum Schließen bringt, indem er das Fahrpedal oder andere Vorrichtungen zum Regeln der Motordrehzahl benutzt. Dies wird als instationärer Nebenabtrieb bezeichnet. Dieser Vorgang kann ebenfalls in der Neutralstellung des Getriebes erfolgen. Aber es besteht auch die Möglichkeit mit zugeschaltetem Nebenabtrieb und eingelegtem Gang zu fahren, wie es z.B. bei Straßenkehrmaschinen erforderlich ist.

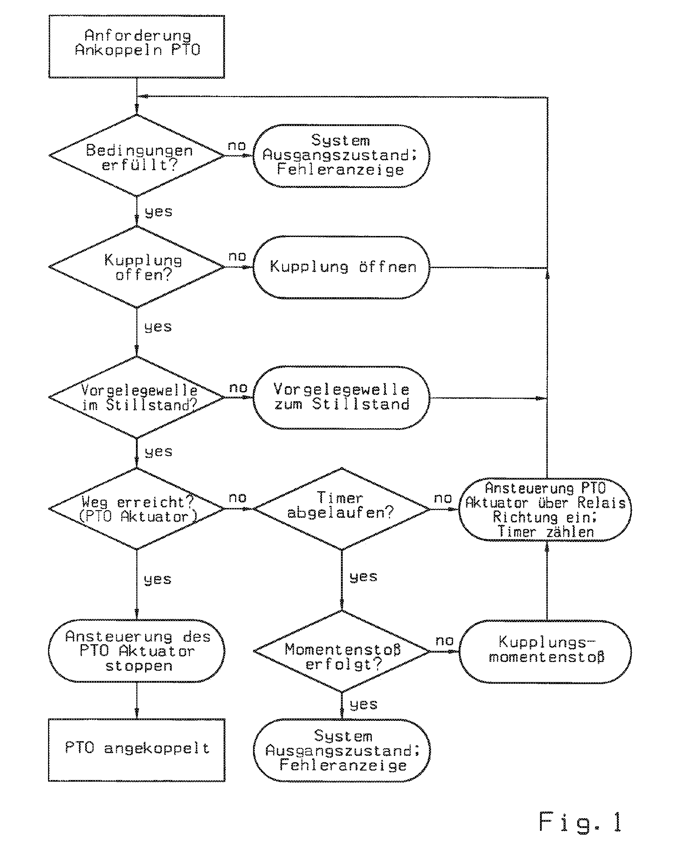

Das in Figur 1 dargestellte Ablaufdiagramm zeigt das erfindungsgemäße Verfahren zum Ankoppeln des Nebenabtriebes nur beispielhaft. Es beginnt mit dem Verfahrensschritt, bei dem bei abgekoppelten PTO die Anforderung zum Ankoppeln des PTO durch den Fahrer vorliegt. Als Bedingungen zum Ankoppeln des Nebenabtriebes kann vorgesehen sein, dass das Fahrzeug sich im Stillstand befindet und der Fahrschalter auf N sowie das Getriebe in der Neutralstellung sich befindet und zu dem der Motor betätigt ist. Zudem sollten sämtliche beteiligte Bauteile beziehungsweise Komponenten funktionstüchtig sein. Es sollte auch kein anderer Fehler vorliegen.

Nachdem der Fahrer über ein Bedienelement 1 zum Betätigen des Nebenabtriebes den Befehl "PTO Ankoppeln "gesetzt hat, wird dieser von dem Getriebesteuergerät 2 z.B. auf einem digitalen Eingang empfangen. Sollten die Bedingungen nicht erfüllt sein, kehrt das System zum Ausgangzustand zurück und es könnte eine Fehleranzeige auf einem Display angezeigt werden. Wenn die oben genannten Bedingungen erfüllt sind, wird geprüft, ob die Kupplung offen ist, falls nicht, wird die Kupplung geöffnet und das Verfahren beginnt von neuem oder kehrt zu einem der vorherigen Verfahrensschritte zurück. Der Fahrer selbst bemerkt dies jedoch nicht.

Sobald die Kupplung offen ist, wird geprüft, ob sich die Vorgelegewelle beziehungsweise die Getriebewelle im Stillstand befindet. Wenn dies nicht der Fall ist, wird die Vorgelegewelle zum Stillstand abgebremst und das Verfahren beginnt von neuem oder kehrt zu einem der vorherigen Verfahrensschritte zurück. Der Fahrer selbst bemerkt dies jedoch nicht. Der Stillstand der Vorgelegewelle kann z.B. dadurch erreicht werden, dass das Getriebesteuergerät kurz den ersten Gang ansynchronisiert.

Wenn sich die Vorgelegewelle beziehungsweise die Getriebewelle im Stillstand befindet, kann das Getriebesteuergerät 2 ein Relais 3 einer Aktorik 4 des Nebenabtriebes ansteuern, um eine Spannung an einem Elektromotor 5 der Aktorik 4 des Nebenabtriebes anzulegen. Gleichzeitig wird mit einem Messverfahren in dem Getriebesteuergerät 2 ein Inkrementalgeber 6 der Aktorik 4 des Nebenabtriebes ausgewertet, um die aktuelle Position beziehungsweise den aktuellen Weg der Aktorik 4 zu erfassen und bei der Ansteuerung zu berücksichtigen. Wenn das Erreichen eines vorbestimmten Weges beziehungsweise einer bestimmten Position der Aktorik 4 durch das Getriebesteuergerät 2 erkannt wird, wird die Ansteuerung des Nebenabtrieb-Aktuators gestoppt und der Nebenabtrieb als angekoppelt gesehen bzw. gemeldet.

Wenn der vorbestimmte Weg nicht erreicht wird, beispielsweise aufgrund einer Zahn auf Zahnstellung bei der Klauenkupplung, kann durch kurzzeitiges Schließen der Kupplung innerhalb einer vorgegebenen Zeitspanne (Timer abgelaufen?) diese Zahn auf Zahnstellung aufgelöst werden, da die Vorgelegewelle beziehungsweise die Getriebewelle aufgrund des kurzzeitigen Schließens der Kupplung gedreht wird, welches auch als Kupplungsstoß bezeichnet wird. Nach dem Auflösen der Zahn auf Zahnstellung kann das Ankoppeln des Nebenabtriebes erneut versucht werden. Der PTO-Aktuator 4 wird über das Relais 3 "Richtung ein" angesteuert und der Timer zählt.

Wenn das kurzzeitige Anlegen der Kupplung bereits erfolgt ist und trotzdem kein Ankoppeln des Nebenabtriebes möglich ist, kann das System zum Ausgangszustand zurückkehren oder kehrt zu einem der vorherigen Verfahrensschritte zurück und gibt beispielsweise eine Fehleranzeige aus, z.B. durch Blinken, auf einem Display dem Fahrer anzeigen. Danach kann der Fahrer erneut eine Anforderung zum Ankoppeln des Nebenabtriebes durch das Bedienelement 1 absetzen. Nach mehreren erfolglosen Versuchen besteht die Möglichkeit, dass ein Fehler eingetragen wird und somit keine weiteren Versuche mehr zugelassen werden.

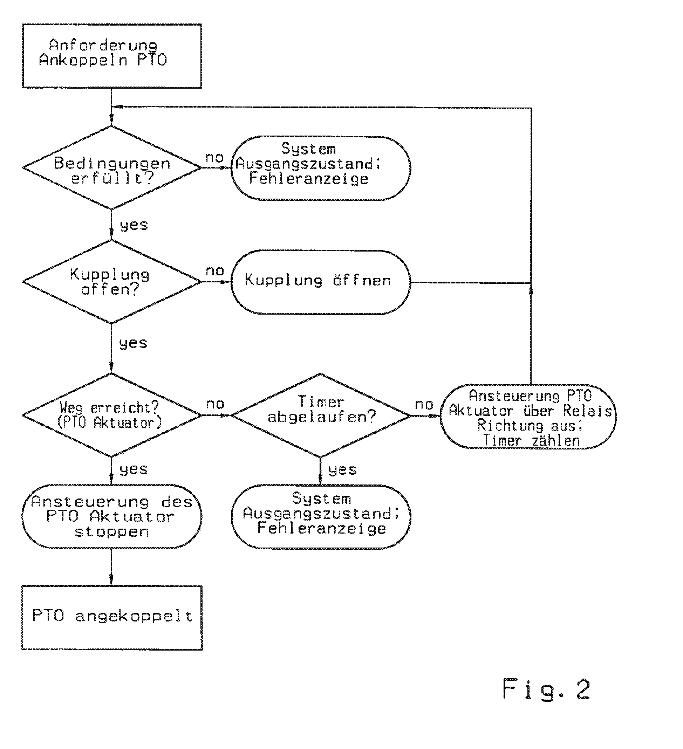

In Figur 2 ist ein mögliches Ablaufdiagramm eines Verfahrens zum Abkoppeln eines Nebenabtriebes bei einem Getriebe dargestellt. Das Verfahren beginnt bei angekoppeltem PTO mit dem fahrerseitigen Befehl "Nebenabtrieb Abkoppeln ". Auch das Abkoppeln des Nebenabtriebes ist ebenfalls nur im Stillstand des Fahrzeuges erlaubt, ausgenommen es liegen schwerwiegende Getriebe- beziehungsweise Elektronikfehler vor. Dabei muss sich das Getriebe nicht notwendigerweise in der Neutralstellung befinden. Der Motor muss nicht unbedingt laufen.

Nach dem der vom Fahrer abgesetzte Befehl von dem Getriebesteuergerät 2 empfangen worden ist, wird zunächst geprüft, ob sämtliche Bedingungen erfüllt sind. Wenn die Bedingungen nicht erfüllt sind, beginnt das Verfahren von neuem oder kehrt zu einem der vorherigen Verfahrenschritte zurück. Der Fahrer bemerkt dies nicht. Sind die Bedingungen erfüllt, wird geprüft, ob die Kupplung offen ist. Sollte dies nicht der Fall sein, wird die Kupplung geöffnet und das Verfahren beginnt von neuem oder kehrt zu einem der vorherigen Verfahrenschritte zurück. Der Fahrer bemerkt dies nicht.

Danach kann das Getriebesteuergerät 2 die Aktorik 4 des Nebenabtriebes über das Relais 3 ansteuern und über den Inkrementalgeber 6 den Aktorikweg überwachen. Sobald der vorbestimmte Wert erreicht ist, gilt der Nebenabtrieb als abgekoppelt. Ebenso wie bei dem Verfahren zum Ankoppeln kann es beim Abkoppeln mehrere Versuche geben. Auch hier wird eine Zeitspanne (Timer abgelaufen?) vorgegeben, in der mehrere Versuche zum Abkoppeln möglich sind. Der PTO-Aktuator 4 wird über das Relais 3 "Richtung aus" angesteuert und der Timer zählt. Wenn der Timer abgelaufen ist, kehrt das System zum Ausgangszustand zurück und gibt eine Fehleranzeige z. B. auf einem Display aus.

Im Rahmen eines Notlaufes beispielsweise bei schweren Getriebefehlern kann der Nebenabtrieb ohne Fahrerbefehl abgekoppelt werden. Auch z. B. bei geschlossener Kupplung und während der Fahrt des Fahrzeuges.

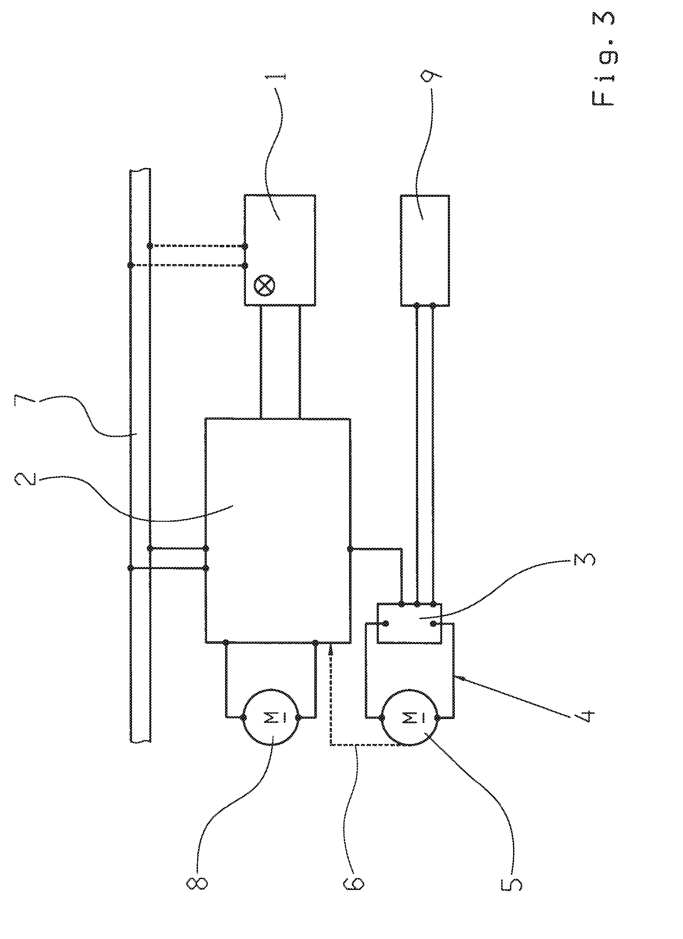

Figur 3 zeigt eine schematische Ansicht einer möglichen Ausführungsvariante einer erfindungsgemäßen Anordnung zum Ansteuern eines Ankoppel- und/oder Abkoppelvorganges eines Nebenabtriebes (PTO) bei einem automatisierten Getriebe eines Fahrzeuges.

Die erfindungsgemäße Anordnung umfasst ein Getriebesteuergerät 2, welches über einen CAN-Bus 7 mit mehreren anzusteuernden Komponenten gekoppelt ist. Beispielsweise kann über das Getriebesteuergerät 2 eine Kupplungsaktorik 8 zum Betätigen der Kupplung des Getriebes angesteuert werden.

Erfindungsgemäß ist vorgesehen, dass das Getriebesteuergerät 2 auch zum Aktivieren beziehungsweise Ansteuern einer Aktorik 4 des Nebenabtriebes verwendet wird. Auf diese Weise kann ein zusätzliches Steuergerät eingespart werden.

Das Getriebesteuergerät 2 kann dazu mit einem Bedienelement 1 direkt oder über den CAN-Bus gekoppelt sein. Das Bedienelement 1 dient dazu den Befehl des Fahrers zum Ankoppeln oder Abkoppeln zu generieren und an das Getriebesteuergerät 2 zu senden. Nachdem das Getriebesteuergerät 2 den Befehl zum Ankoppeln oder Abkoppeln von dem Bedienelement 1 erhalten hat, wird von dem Getriebesteuergerät 2 überprüft, ob die vorbestimmten Bedingungen für den jeweiligen Vorgang erfüllt sind. Dies ist auf einfachste Weise möglich, da das Getriebesteuergerät 2 über diese notwendigen Informationen verfügt.

Wenn dem Durchführen des Ankoppel- oder Abkoppelvorganges nichts entgegensteht, kann das Getriebesteuergerät 2 ein entsprechendes Signal an ein Relais 3 der Aktorik des Nebenabtriebes senden, so dass das Relais 3, welches mit einer Energieversorgung 9 gekoppelt ist, einen Elektromotor 5 der Aktorik des Nebenabtriebes mit Spannung versorgt, so dass die z.B. als Klauenkupplung ausgebildete Verbindung zwischen dem Antriebsstrang und dem Nebenabtrieb geschlossen werden kann. Der aktuelle Weg beziehungsweise die aktuelle Position der Aktorik 4 des Nebenabtriebes beziehungsweise des Elektromotors 5 kann über z.B. einen Inkrementalgeber 6 überwacht werden, der seine Signale wiederum an das Getriebesteuergerät 2 sendet. Auf diese Weise kann die Ansteuerung der Aktorik 4 des Nebenabtriebes über das Getriebesteuergerät 2 in Abhängigkeit des aktuellen Zustandes der Klauenkupplungen erfolgen. Es sind auch andere Ansteuerungsmöglichkeiten einsetzbar.

### Bezugszeichen

- 1: Bedienelement
- 2: Getriebesteuergerät
- 3: Relais
- 4: Aktorik des Nebenabtriebes
- 5: Elektromotor
- 6: Inkrementalgeber
- 7: CAN-Bus
- 8: Kupplungsaktorik
- 9: Energieversorgung

## Patentansprüche

1. Verfahren zum Ankoppeln eines Nebenabtriebes bei einem automatisierten Getriebe eines Fahrzeuges, bei dem nach der Anforderung des Ankoppelns des Nebenabtriebes die Erfüllung vorbestimmter Bedingungen überprüft werden und bei Erfüllung der vorbestimmten Bedingungen eine Aktorik (4) zum Ankoppeln des Nebenabtriebes aktiviert wird, **dadurch gekennzeichnet, dass** die Aktorik zum Ankoppeln des Nebenabtriebes durch das Getriebesteuergerät (2) angesteuert wird.

2. Verfahren nach Anspruch 1, **dadurch gekennzeichnet, dass** die Kupplung des Getriebes über das Getriebesteuergerät (2) geöffnet wird, wenn die vorbestimmten Bedingungen erfüllt sind, dass die drehende Getriebewelle abgebremst wird, indem der erste Gang ansynchronisiert wird, und dass danach die Aktorik (4) des Nebenabtriebes durch das Getriebesteuergerät (2) angesteuert wird, bis die Aktorik (4) eine vorbestimmte Position erreicht und der Nebenabtrieb als angekoppelt gilt.

3. Verfahren nach Anspruch 2, **dadurch gekennzeichnet, dass** durch kurzzeitiges Schließen der Kupplung die Getriebewelle verdreht wird, so dass eine mögliche Zahn auf Zahnstellung beseitigt wird , wenn die Aktorik nach einer vorbestimmten Zeitspanne die vorgegebene Position nicht erreicht, und dass danach das Ankoppeln des Nebenabtriebes erneut versucht wird.

4. Verfahren nach Anspruch 3, **dadurch gekennzeichnet, dass** dem Fahrer eine Fehlermeldung angezeigt wird und der ursprüngliche Zustand eingestellt wird, wenn das Ankoppeln des Nebenabtriebes auch nach dem erneuten Versuch wieder nicht möglich ist.

5. Verfahren nach Anspruch 4, **dadurch gekennzeichnet, dass** nach mehreren erfolglosen Versuchen des Ankoppelns des Nebenabtriebes keine weiteren Versuche durch das Getriebesteuergerät (2) mehr zugelassen werden.

6. Verfahren zum Abkoppeln eines Nebenabtriebes bei einem automatisierten Getriebe eines Fahrzeuges, bei dem nach der Anforderung des Abkoppelns des Nebenabtriebes die Erfüllung vorbestimmter Bedingungen überprüft werden und bei Erfüllung der vorbestimmten Bedingungen eine Aktorik (4) zum Abkoppeln des Nebenabtriebes aktiviert wird, insbesondere nach einem der vorangehenden Ansprüche, **dadurch gekennzeichnet, dass** die Aktorik (4) zum Abkoppeln des Nebenabtriebes durch das Getriebesteuergerät (2) angesteuert wird.

7. Verfahren nach Anspruch 6, **dadurch gekennzeichnet, dass** die Kupplung des Getriebes durch das Getriebesteuergerät (2) geöffnet wird, wenn die vorbestimmten Bedingungen erfüllt sind, und dass danach die Aktorik (4) des Nebenabtriebes durch das Getriebesteuergerät (2) angesteuert wird, bis die Aktorik (4) eine vorbestimmte Position erreicht und der Nebenabtrieb als abgekoppelt gilt.

8. Verfahren nach Anspruch 7, **dadurch gekennzeichnet, dass** das Abkoppeln des Nebenabtriebes erneut versucht wird, wenn die Aktorik (4) nach einer vorbestimmten Zeitspanne die vorgegebene Position nicht erreicht.

9. Verfahren nach Anspruch 8, **dadurch gekennzeichnet, dass** dem Fahrer eine Fehlermeldung angezeigt wird und der ursprüngliche Zustand eingestellt wird, wenn das Abkoppeln des Nebenabtriebes auch nach dem erneuten Versuch wieder nicht möglich ist.

10. Verfahren nach Anspruch 9, **dadurch gekennzeichnet, dass** nach mehreren erfolglosen Versuchen des Abkoppelns des Nebenabtriebes keine weiteren Versuche durch das Getriebesteuergerät (2) mehr zugelassen werden.

11. Verfahren nach einem der vorangehenden Ansprüche, **dadurch gek ennzeichnet, dass** die jeweils aktuelle Position der Aktorik (4) über eine Positionserfassung ermittelt wird.

12. Verfahren nach Anspruch 11, **dadurch gekennzeichnet, dass** die jeweils aktuelle Position der Aktorik (4) an das Getriebesteuergerät (2) kontinuierlich übermittelt wird.

13. Anordnung zum Ansteuern eines Ankoppel- und/oder eines Abkoppelvorgangs eines Nebenabtriebes bei einem automatisierten Getriebe eines Fahrzeuges mit einem Getriebesteuergerät (2), welches mit einer Kupplungsaktorik und einem Bedienelement (1) eines Nebenabtriebes gekoppelt ist, wobei zum Ankoppeln und/oder Abkoppeln des Nebenabtriebes eine Aktorik (4) des Nebenabtriebes vorgesehen ist, insbesondere zum Durchführen eines Verfahrens nach einem der vorangehenden Ansprüche, **dadurch gekennzeichn et, dass** das Getriebesteuergerät (2) mit dem Bedienelement (1) des Nebenabtriebes und mit der Aktorik (4) des Nebenabtriebes gekoppelt ist.

14. Anordnung nach Anspruch 13, **dadurch gekennzeichnet, dass** die Aktorik (4) des Nebenabtriebes einen Elektromotor (5) zum Betätigen einer Kupplung zum Ankoppeln und/oder Abkoppeln des Nebenabtriebes und ein Relais (3) zum Ansteuern des Elektromotors (5) umfasst, welches mit einer Energieversorgung (9) verbunden ist.

15. Anordnung nach Anspruch 13 oder 14, **dadurch gekennzeichn et, dass** die aktuelle Position der Aktorik (4) über eine Positionserfassungseinrichtung erfassbar ist.

16. Anordnung nach Anspruch 15, **dadurch gekennzeichnet, dass** als Positionserfassungseinrichtung ein Inkrementalgeber (6) vorgesehen ist.

17. Anordnung nach Anspruch 15 oder 16, **dadurch gekennzeichn et, dass** das Getriebesteuergerät (2) zur Ansteuerung der Aktorik (4) des Nebenabtriebes mit dem Relais (3) und/oder mit der Positionserfassungseinrichtung gekoppelt ist.

18. Anordnung nach einem der Ansprüche 13 bis 17, **dadurch gekenn zeichnet**, **dass** das Getriebesteuergerät (2) über einen CAN-Bus (7) mit dem Bedienelement (1) des Nebenabtriebes gekoppelt ist.
